# EUROPEAN PATENT SPECIFICATION

(11) **EP 3 282 807 B1**
(45) Date of publication and mention of the grant of the patent: **30.06.2021**
(21) Application number: 15890230.4
(22) Date of filing: 28.04.2015
(51) Int. Cl.: H04W 76/14, H04W 88/04

(54) **INFORMATION TRANSMISSION METHOD, DEVICE, AND SYSTEM**
INFORMATIONSÜBERTRAGUNGSVERFAHREN, -VORRICHTUNG UND -SYSTEM
PROCÉDÉ, DISPOSITIF ET SYSTÈME DE TRANSMISSION D'INFORMATIONS

(43) Date of publication of application: 14.02.2018
(73) Proprietor: Huawei Technologies Co., Ltd., Longgang District Shenzhen, Guangdong 518129 (CN)
(72) Inventor: WANG, Jian, Shenzhen, Guangdong 518129 (CN)
(74) Representative: Goddar, Heinz J.
(86) International application number: PCT/CN2015/077681
(87) International publication number: WO 2016/172850

(56) References cited:
- EP-A1- 2 768 273
- CN-A- 103 037 359
- CN-A- 104 683 969
- US-A1- 2014 198 708
- INTEL CORPORATION: "Design of Primary D2D Synchronization Signal", 3GPP DRAFT; R1-144648 INTEL - SYNC PD2DSS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20141117 - 20141121 17 November 2014 (2014-11-17), XP050875735, Retrieved from the Internet: URL:http://www.3gpp.org/ftp/Meetings_3GPP_ SYNC/RAN1/Docs/ [retrieved on 2014-11-17]
- HUAWEI ET AL: "Considerations of D2D Communication", 3GPP DRAFT; R1-140052, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20140210 - 20140214 9 February 2014 (2014-02-09), XP050735619, Retrieved from the Internet: URL:http://www.3gpp.org/ftp/Meetings_3GPP_ SYNC/RAN/RAN1/Docs/ [retrieved on 2014-02-09]
- HUAWEI ET AL.: 'Rl-141137: Scrambling for D2D Broadcast Communication' 3GPPTSG RAN WG1 MEETING #76B 04 April 2014, XP050786812
- ERICSSON: "Synchronization Signals and Channel Design for D2D Discovery and Communication", 3GPP DRAFT; R1-140774 D2D SYNCHRONIZATION SIGNALS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20140210 - 20140214 9 February 2014 (2014-02-09), XP050736275, Retrieved from the Internet: URL:http://www.3gpp.org/ftp/Meetings_3GPP_ SYNC/RAN/RAN1/Docs/ [retrieved on 2014-02-09]

## Description

### TECHNICAL FIELD

The present invention relates to the communications field, and in particular, to an information transmission method, a device, and a system.

### BACKGROUND

With development of communications technologies, data transmitted in a wireless communications system is growing increasingly. A higher throughput and higher transmission efficiency are required to meet a user requirement. How to improve resource utilization and improve data transmission efficiency by using limited time-frequency resources becomes a critical problem. Cell resources are reused in a D2D ProSe (Device to Device Proximity Service, device to device proximity service), so that terminal devices can directly communicate with each other, improving resource utilization and a network capacity.

In the prior art, a D2D scenario in an LTE (Long Term Evolution, Long Term Evolution) system is used as an example. In a D2D system, direct communication is performed between terminal devices, such as mobile phones or tablet computers, the devices are more mobile, and a channel status changes quickly. If two terminal devices that perform direct communication are relatively far from each other or a change in channel quality is relatively significant, the two terminal devices cannot perform D2D communication.

Intel Corporation: "Design of Primary D2D Synchronization Signal", 3GPP Draft R1-144648 Intel-Sync PD2DSS, 3GPP, Mobile Competence Centre, vol. RAN WG1, no. San Francisco, USA, 20141117-20141121 discloses a way to resolve the time-frequency ambiguity problem of ZC sequence is to apply the additional common scrambling to all ZC sequences defined in PD2DSS set. The scrambling pattern can be symmetrical and optimized to ensure the low PAPR/CM of scrambled PD2DSS sequences.

Huawei et al: "Considerations of D2D Communication", 3GPP Draft, R1-140052, 3GPP, Mobile Competence centre, vol. RAN WG1, no. Prague, Czech Republic, 20140210-20140214 discloses physical layer transmissions with a common identity. In proposal 1, it is disclosed that there should be a sharing ID chosen for the purpose of whitening interference in case of broadcast D2D communication. In proposal 2, it is disclosed that synchronization source ID and group ID can be used for multicast and unicast communication, while for broadcast communication service-specific ID can be used.

US 2014/198708 A1 discloses a method of supporting a group communication. The method comprises: establishing a communication connection with a second UE via a first relay UE; and receiving, from the first relay UE, a message requesting a relay connection, the message including first information indicating a current hop count, wherein if a condition is satisfied, the relay connection is provided between the first relay UE and a fourth UE via a second relay UE, the second relay UE being the first UE, wherein if the condition is not satisfied, the request of the relay connection is rejected, wherein the condition includes: the current hop count is less than a maximum number of allowed hops.

Ericsson: "Synchronization Signals and Channel Design for D2D Discovery and Communication", 3GPP DRAFT, R1-140774; 3GPP TSG RAN WG1 Meeting #76; Prague, Czech Republic, 10th-14th February 2014 discusses synchronization signals design (D2DSS) and physical direct synchronization control channel design (PD2DSCH).

### SUMMARY

The present invention provides an information transmission method, a related device and a wireless network system in the independent claims so as to resolve a problem related to the implementation of an information transmission method to save channel resources.

Possible implementation manners are disclosed in the dependent claims.

The invention is carried out according to the appended independent claims. Optional features of the invention are carried out according to the dependent claims.

### BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of an information transmission method according to an embodiment of the present invention;
FIG. 2 is a schematic diagram of a data structure of a scrambling seed according to an embodiment of the present invention;
FIG. 3 is a schematic flowchart of another information transmission method according to the present invention;
FIG. 4 is a schematic diagram of a network architecture of a D2D scenario according to an embodiment of the present invention;
FIG. 5 is a schematic flowchart of an information transmission method according to another embodiment of the present invention;
FIG. 6 is a schematic structural diagram of a first device;
FIG. 7 is a schematic structural diagram of a second device;
FIG. 8 is a schematic structural diagram of a first device;
FIG. 9 is a schematic structural diagram of a second device according to the present invention; and
FIG. 10 is a schematic structural diagram of a wireless network system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

It should be understood that, the technical solutions of the embodiments of the present invention may be applied to various communications systems, such as: a Global System for Mobile Communications (Global System of Mobile communication, GSM) system, a Code Division Multiple Access (Code Division Multiple Access, CDMA) system, a Wideband Code Division Multiple Access (Wideband Code Division Multiple Access, WCDMA) system, a general packet radio service (General Packet Radio Service, GPRS), a Long Term Evolution (Long Term Evolution, LTE) system, an LTE frequency division duplex (Frequency Division Duplex, FDD) system, LTE time division duplex (Time Division Duplex, TDD), Universal Mobile Telecommunications System (Universal Mobile Telecommunications System, UMTS), or a Worldwide Interoperability for Microwave Access (Worldwide Interoperability for Microwave Access, WiMAX) communications system.

It should be understood that, a first device or a second device in the embodiments of the present invention may be a mobile phone (or referred to as a "cellular" phone), or a computer having a wireless communication function. Alternatively, the user equipment may be a portable, pocket-sized, handheld, computer built-in, or in-vehicle mobile apparatus.

In the embodiments of the present invention, "first" and "second" are only used for distinguishing, and are not intended to limit the embodiments of the present invention. The first device can execute a method of the second device, and the second device can also execute a method of the first device. Similarly, first information and second information in the embodiments of the present invention are also only used for distinguishing. Functions performed by using the first information can also be performed by using the second information. This is not limited in the present invention.

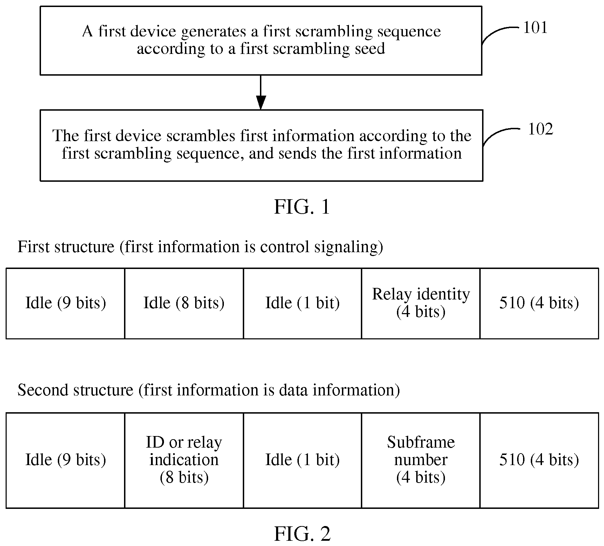

The present invention provides an information transmission method, which is applied to a D2D (Device to Device, device to device) scenario. As shown in FIG. 1, the method includes the following steps.

101: A first device generates a first scrambling sequence according to a first scrambling seed.

The first scrambling seed is generated according to a relay level or an information source of first information. The relay level of the first information is used to indicate a quantity of relay devices that the first information has passed by before being transmitted to a receive end. The information source of the first information is used to indicate a location of a starting device for transmitting the first information. It should be noted that, when the first device is the starting device for transmitting the first information, the relay level of the first information is 0. In addition, the location of the starting device for transmitting the first information described herein is within a network coverage area or outside a network coverage area. For example, the location of the starting device for transmitting the first information may be in a cell or out of a cell. A method of defining the location of the starting device is not limited in the present invention.

Optionally, the first information may be control signaling or data information. As shown in FIG. 2, FIG. 2 shows a structure of the first scrambling seed. A first structure is a structure of the first scrambling seed when the first information is the control signaling, and a second structure is a structure of the first scrambling seed when the first information is the data information. N bits in the first scrambling seed can be used to indicate the relay level or information source of the first information, where N is an integer greater than 0. For example, when one bit is used to indicate the information source, 0 indicates that the location of the starting device for transmitting the first information is in a cell, and 1 indicates that the location of the starting device is out of a cell. For another example, when two bits are used to indicate the relay level of the first information, "00" indicates that the relay level of the first information is 0, "01" indicates that the relay level of the first information is 1, "10" indicates that the relay level of the first information is 2, and "11" indicates that the relay level of the first information is 4. Certainly, these are only examples for description and do not mean that the present invention is limited thereto.

Alternatively, optionally, the first scrambling seed includes a physical layer ID (Identity, identity), and the physical layer ID is used to indicate the relay level or information source of the first information.

Specifically optionally, in an application scenario, the first scrambling seed may indicate the relay level of the first information. That the physical layer ID indicates the relay level of the first information is used as an example.

When a sequence of the physical layer ID included in a first scrambling seed is the first sequence, the relay level of the first information is 0; when the sequence of the physical layer ID included in the first scrambling seed is an (i+1)^{th} sequence, the relay level of the first information is i, where i is a positive integer.

Alternatively, when an offset of the physical layer ID included in a first scrambling seed is the first offset, the relay level of the first information is 0; when the offset of the physical layer ID included in the first scrambling seed is an (i+1)^{th} offset, the relay level of the first information is i, where i is a positive integer.

Certainly, this is only an example for description and does not mean that the present invention is limited thereto.

102: The first device scrambles first information according to the first scrambling sequence, and sends the first information.

Optionally, after step 102, the method may further include:
receiving, by the first device, second information when a relay level of the second information is a preset level or an information source of the second information is a preset source, where the relay level of the second information is used to indicate a quantity of relay devices that the second information has passed by before being transmitted to the first device, and the information source of the second information is used to indicate a location of a starting device for transmitting the second information;
generating, by the first device, a second scrambling sequence according to a second scrambling seed, where the second scrambling seed is generated according to the relay level or information source of the second information; and
descrambling, by the first device, the second information according to the second scrambling sequence.

Further optionally, when the second scrambling seed indicates the relay level of the second information, after the descrambling, by the first device, the second information according to the second scrambling sequence, the method further includes:
using, by the first device, the relay level of the second information plus 1 as a new relay level of the second information, generating a third scrambling seed according to the new relay level of the second information, and generating a third scrambling sequence according to the third scrambling seed; and
scrambling, by the first device, the second information according to the third scrambling sequence, and sending the second information.

According to the information transmission method provided in this embodiment of the present invention, a first device generates a first scrambling sequence according to a first scrambling seed, scrambles first information according to the first scrambling sequence, and sends the first information, where the first scrambling seed is generated according to a relay level or an information source of the first information. Because the first scrambling seed indicates the relay level or information source of the first information, information of different relay levels or from different information sources but with same information content can be forwarded only once, avoiding repeated transmissions and saving channel resources. This resolves a problem in the prior art that in a D2D scenario, a terminal device cannot perform D2D communication due to a relatively long distance or a relatively significant change in channel quality.

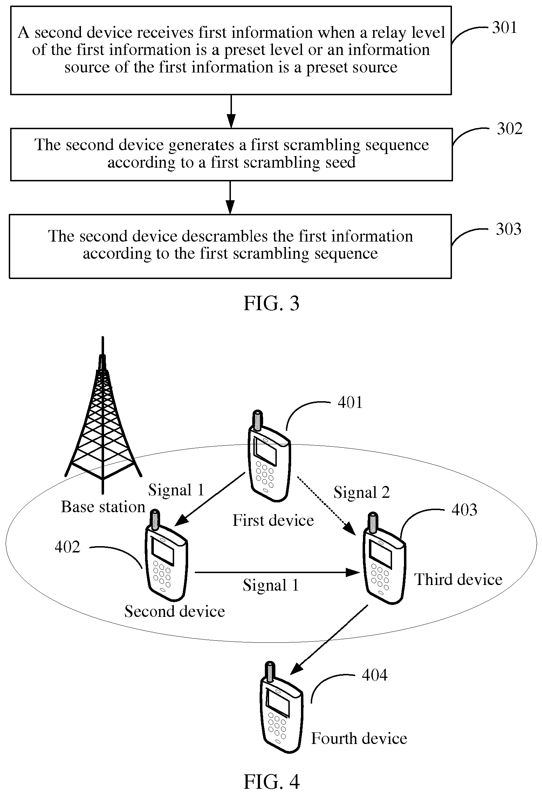

With reference to the embodiment corresponding to FIG. 1, the present invention provides an information transmission method, which corresponds to a receive side of the information transmission method in the embodiment corresponding to FIG. 1. As shown in FIG. 3, the method includes the following steps.

301: A second device receives first information when a relay level of the first information is a preset level or an information source of the first information is a preset source.

The relay level of the first information is used to indicate a quantity of relay devices that second information has passed by before being transmitted to the second device. The information source of the first information is used to indicate a location of a starting device for transmitting the first information.

It should be noted that, the second device first temporarily stores all or a part of the first information, and then descrambles the temporarily stored part. A scrambling seed used during descrambling is generated according to a preset level or preset source. If descrambling is correctly performed, it indicates that the relay level of the first information is a preset level or the information source of the first information is a preset source. In this case, the second device receives the remaining part of the first information or descramble all temporarily stored first information. Optionally, also not part of the invention, the second device may be a destination device or relay device for transmission of the first information. The preset level is a preset relay level, and the preset source is a preset information source. In this way, the second device only receives information whose relay level is the preset level or whose information source is the preset source. Information of different relay levels but with same content or information from different information sources but with same content is received only once, avoiding repeatedly receiving same information.

It should be noted that, using a D2D scenario in an LTE (Long Term Evolution, Long Term Evolution) system as an example, as shown in FIG. 4, if a first device 401 needs to transmit data to a second device 402 by using a third device 403 and a fourth device 404, the first device 401 needs to use an SA (Scheduling Assignment, scheduling assignment) resource to send scheduling signaling and use a data resource to send a corresponding D2D signal. The scheduling signaling includes a destination address, that is, an address of the second device. In this way, the first device 401 sends a signal 1 within a first time period and then sends a signal 2 within a second time period. The first time period is adjacent to the second time period. The third device 403 receives the signal 1 within the first time period and then sends the signal 1 within the second time period. In this way, the fourth device 404 can receive, within the second time period, the signal 2 sent by the first device 401 and the signal 1 sent by the third device 403. Because destination addresses of both the signals are the second device 402, a sequence relationship between data carried by the two signals cannot be identified. As a result, an error occurs during data receiving. However, in the information transmission method provided in this embodiment of the present invention, the second device 402 only receives a signal of a preset level. Therefore, for signals of a same relay level, a sequence relationship is not mired in confusion. This avoids a problem that an error occurs during data receiving because a sequence relationship between different signals cannot be identified. In addition, information of different relay levels but with same content is received only once, avoiding repeated receiving.

302: The second device generates a first scrambling sequence according to a first scrambling seed. The first scrambling seed is generated according to the relay level or information source of the first information.

Optionally, the first information may be control signaling or data information, and N bits in the first scrambling seed can be used to indicate the relay level or information source of the first information, where N is an integer greater than 0.

Alternatively, optionally, the first scrambling seed includes a physical layer ID, and the physical layer ID is used to indicate the relay level or information source of the first information. Specifically optionally, in an application scenario, the first scrambling seed may indicate the relay level of the first information. That the physical layer ID indicates the relay level of the first information is used as an example.

When a sequence of the physical layer ID included in a first scrambling seed is the first sequence, the relay level of the first information is 0; when the sequence of the physical layer ID included in the first scrambling seed is an (i+1)^{th} sequence, the relay level of the first information is i, where i is a positive integer.

Alternatively, when an offset of the physical layer ID included in a first scrambling seed is the first offset, the relay level of the first information is 0; when the offset of the physical layer ID included in the first scrambling seed is an (i+1)^{th} offset, the relay level of the first information is i, where i is a positive integer.

Certainly, this is only an example for description and does not mean that the present invention is limited thereto.

303: The second device descrambles the first information according to the first scrambling sequence.

Optionally, when the first scrambling seed indicates the relay level of the first information, after step 303, the method further includes:
using, by the second device, the relay level of the first information plus 1 as a new relay level of the first information, generating a third scrambling seed according to the new relay level of the first information, and generating a third scrambling sequence according to the third scrambling seed; and
scrambling, by the second device, the first information according to the third scrambling sequence, and sending the first information.

In addition, optionally, the second device may further generate a second scrambling sequence according to a second scrambling seed. The second scrambling seed is generated according to a relay level or an information source of second information, the relay level of the second information is used to indicate a quantity of relay devices that the second information has passed by before being transmitted to a receive end, and the information source of the second information is used to indicate a location of a starting device for transmitting the second information.

The second device scrambles the second information according to the second scrambling sequence, and sends the second information.

According to the information transmission method provided in this embodiment of the present invention, a second device receives first information when a relay level of the first information is a preset level or an information source of the first information is a preset source, generates a first scrambling sequence according to a first scrambling seed, and descrambles the first information according to the first scrambling sequence, where the first scrambling seed is generated according to the relay level or information source of the first information. Because the first scrambling seed indicates the relay level or information source of the first information, information of different relay levels or from different information sources but with same information content can be forwarded only once, avoiding repeated transmissions and saving channel resources. This resolves a problem in the prior art that in a D2D scenario, a terminal device cannot perform D2D communication due to a relatively long distance or a relatively significant change in channel quality.

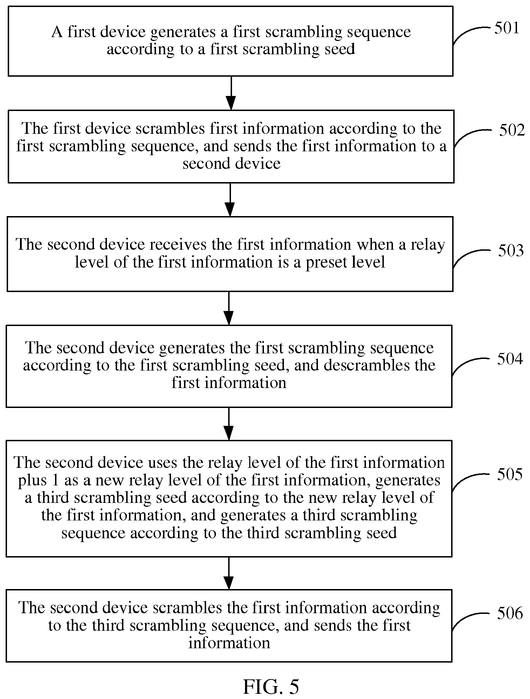

Based on the embodiments corresponding to FIG. 1 and FIG. 2, another embodiment of the present invention provides an information transmission method. In this embodiment, that a first device and a second device are relay devices is used as an example for description. The first device may execute a method of the second device, and the second device may execute a method of the first device. The first device and the second device are only used for distinguishing and are not intended to limit functions performed by the first device and the second device. Certainly, this embodiment is only used as an example for description and does not mean that the present invention is limited thereto. As shown in FIG. 5, the information transmission method provided in this embodiment of the present invention includes the following steps.

501: The first device generates a first scrambling sequence according to a first scrambling seed.

The first scrambling seed is generated according to a relay level or an information source of first information. The relay level of the first information is used to indicate a quantity of relay devices that the first information has passed by before being transmitted to a receive end. The information source of the first information is used to indicate a location of a starting device for transmitting the first information. It should be noted that, when the first device is the starting device for transmitting the first information, the relay level of the first information is 0. In addition, the location of the starting device for transmitting the first information described herein may be in a cell or out of a cell. A method of defining the location of the starting device is not limited in the present invention.

502: The first device scrambles first information according to the first scrambling sequence, and sends the first information to the second device.

It should be noted that, in this embodiment, that the first scrambling seed indicates the relay level of the first information is used as an example for description. Certainly, this is only an example for description and does not mean that the present invention is limited thereto.

503: The second device receives the first information when a relay level of the first information is a preset level.

504: The second device generates the first scrambling sequence according to the first scrambling seed, and descrambles the first information.

505: The second device uses the relay level of the first information plus 1 as a new relay level of the first information, generates a third scrambling seed according to the new relay level of the first information, and generates a third scrambling sequence according to the third scrambling seed. 506: The second device scrambles the first information according to the third scrambling sequence, and sends the first information.

According to the information transmission method provided in this embodiment of the present invention, a first device generates a first scrambling sequence according to a first scrambling seed, scrambles first information according to the first scrambling sequence, and sends the first information, where the first scrambling seed is generated according to a relay level or an information source of the first information. Because the first scrambling seed indicates the relay level or information source of the first information, information of different relay levels or from different information sources but with same information content can be forwarded only once, avoiding repeated transmissions and saving channel resources. This resolves a problem in the prior art that in a D2D scenario, a terminal device cannot perform D2D communication due to a relatively long distance or a relatively significant change in channel quality.

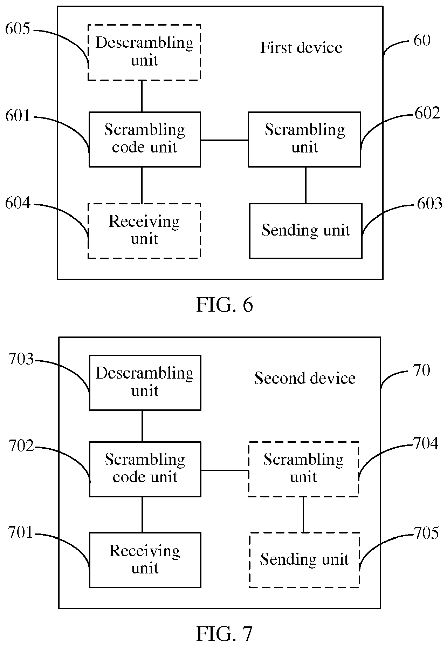

Based on the embodiment corresponding to FIG. 1, an embodiment of the present invention provides a first device, configured to execute the information transmission method described in the embodiment corresponding to FIG. 1, and preferably applied to a device to device D2D scenario. As shown in FIG. 6, the first device 60 includes a scrambling code unit 601, a scrambling unit 602, and a sending unit 603.

The scrambling code unit 601 is configured to generate a first scrambling sequence according to a first scrambling seed. The first scrambling seed is generated according to a relay level or an information source of first information, the relay level of the first information is used to indicate a quantity of relay devices that the first information has passed by before being transmitted to a receive end, and the information source of the first information is used to indicate a location of a starting device for transmitting the first information. Optionally, the location of the starting device for transmitting the first information is within a network coverage area or outside a network coverage area.

The scrambling unit 602 is configured to scramble the first information according to the first scrambling sequence generated by the scrambling code unit 601.

The sending unit 603 is configured to send the first information scrambled by the scrambling unit 602.

Optionally, in an application scenario, the first device 60 further includes a receiving unit 604 and a descrambling unit 605.

The receiving unit 604 is configured to receive second information when a relay level of the second information is a preset level or an information source of the second information is a preset source. The relay level of the second information is used to indicate a quantity of relay devices that the second information has passed by before being transmitted to the first device, and the information source of the second information is used to indicate a location of a starting device for transmitting the second information.

The scrambling code unit 601 is further configured to generate a second scrambling sequence according to a second scrambling seed.

The descrambling unit 605 is configured to descramble, according to the second scrambling sequence generated by the scrambling code unit 601, the second information received by the receiving unit. The second scrambling seed is generated according to the relay level or information source of the second information received by the receiver.

Further optionally, the scrambling code unit 601 is further configured to: when the second scrambling seed indicates the relay level of the second information, use the relay level of the second information plus 1 as a new relay level of the second information, generate a third scrambling seed according to the new relay level of the second information, and generate a third scrambling sequence according to the third scrambling seed.

The scrambling unit 602 is configured to scramble the second information according to the third scrambling sequence generated by the scrambling code unit 601.

The sending unit 603 is further configured to send the second information scrambled by the scrambling unit 602.

Optionally, N bits in the first scrambling seed may be used to indicate the relay level or information source of the first information, and N is an integer greater than 0.

Optionally, the first scrambling seed may alternatively include a physical layer identity ID, and the physical layer ID is used to indicate the relay level or information source of the first information.

If the physical layer ID is used to indicate the relay level of the first information, two specific implementations are listed herein for description:
Implementation 1: When a sequence of the physical layer ID included in a first scrambling seed is the first sequence, the relay level of the first information is 0; when the sequence of the physical layer ID included in the first scrambling seed is an (i+1)^{th} sequence, the relay level of the first information is i, where i is a positive integer.
Implementation 2: When an offset of the physical layer ID included in a first scrambling seed is the first offset, the relay level of the first information is 0; when the offset of the physical layer ID included in the first scrambling seed is an (i+1)^{th} offset, the relay level of the first information is i, where i is a positive integer.

Optionally, the first information is control signaling, data information, or a discovery signal.

The first device provided in this embodiment of the present invention generates a first scrambling sequence according to a first scrambling seed, scrambles first information according to the first scrambling sequence, and sends the first information, where the first scrambling seed is generated according to a relay level or an information source of the first information. Because the first scrambling seed indicates the relay level or information source of the first information, information of different relay levels or from different information sources but with same information content can be forwarded only once, avoiding repeated transmissions and saving channel resources. This resolves a problem in the prior art that in a D2D scenario, a terminal device cannot perform D2D communication due to a relatively long distance or a relatively significant change in channel quality.

Based on the embodiment corresponding to FIG. 3, an embodiment of the present invention provides a second device, configured to execute the information transmission method described in the embodiment corresponding to FIG. 3, and preferably applied to a device to device D2D scenario. As shown in FIG. 7, the second device 70 includes a receiving unit 701, a scrambling code unit 702, and a descrambling unit 703.

The receiving unit 701 is configured to receive first information when a relay level of the first information is a preset level or an information source of the first information is a preset source. The relay level of the first information is used to indicate a quantity of relay devices that the first information has passed by before being transmitted to the second device. The information source of the first information is used to indicate a location of a starting device for transmitting the first information. Optionally, the location of the starting device for transmitting the first information is within a network coverage area or outside a network coverage area.

The scrambling code unit 702 is configured to generate a first scrambling sequence according to a first scrambling seed. The first scrambling seed is generated according to the relay level or information source of the first information.

The descrambling unit 703 is configured to descramble the first information according to the first scrambling sequence generated by the scrambling code unit 702.

Optionally, the second device 70 further includes a scrambling unit 704 and a sending unit 705. Optionally, in an application scenario:
The scrambling code unit 702 is further configured to generate a second scrambling sequence according to a second scrambling seed. The second scrambling seed is generated according to a relay level or an information source of second information, the relay level of the second information is used to indicate a quantity of relay devices that the second information has passed by before being transmitted to a receive end, and the information source of the second information is used to indicate a location of a starting device for transmitting the second information.

The scrambling unit 704 is configured to scramble the second information according to the second scrambling sequence generated by the scrambling code unit 702.

The sending unit 705 is configured to send the second information scrambled by the scrambling unit 704.

Optionally, in another application scenario:
The scrambling code unit 702 is further configured to: when the first scrambling seed indicates the relay level of the first information, use the relay level of the first information plus 1 as a new relay level of the first information, generate a third scrambling seed according to the new relay level of the first information, and generate a third scrambling sequence according to the third scrambling seed.

The scrambling unit 704 is configured to scramble the first information according to the third scrambling sequence generated by the scrambling code unit 702.

The sending unit 705 is configured to send the first information scrambled by the scrambling unit 704.

Optionally, N bits in the first scrambling seed may be used to indicate the relay level or information source of the first information, and N is an integer greater than 0.

Optionally, the first scrambling seed may alternatively include a physical layer identity ID, and the physical layer ID is used to indicate the relay level or information source of the first information.

If the physical layer ID is used to indicate the relay level of the first information, two specific implementations are listed herein for description:
Implementation 1: When a sequence of the physical layer ID included in a first scrambling seed is the first sequence, the relay level of the first information is 0; when the sequence of the physical layer ID included in the first scrambling seed is an (i+1)^{th} sequence, the relay level of the first information is i, where i is a positive integer.
Implementation 2: When an offset of the physical layer ID included in a first scrambling seed is the first offset, the relay level of the first information is 0; when the offset of the physical layer ID included in the first scrambling seed is an (i+1)^{th} offset, the relay level of the first information is i, where i is a positive integer.

Optionally, the first information is control signaling, data information, or a discovery signal.

The second device provided in this embodiment of the present invention receives first information when a relay level of the first information is a preset level or an information source of the first information is a preset source, generates a first scrambling sequence according to a first scrambling seed, and descrambles the first information according to the first scrambling sequence, where the first scrambling seed is generated according to the relay level or information source of the first information. Because the first scrambling seed indicates the relay level or information source of the first information, information of different relay levels or from different information sources but with same information content can be forwarded only once, avoiding repeated transmissions and saving channel resources. This resolves a problem in the prior art that in a D2D scenario, a terminal device cannot perform D2D communication due to a relatively long distance or a relatively significant change in channel quality.

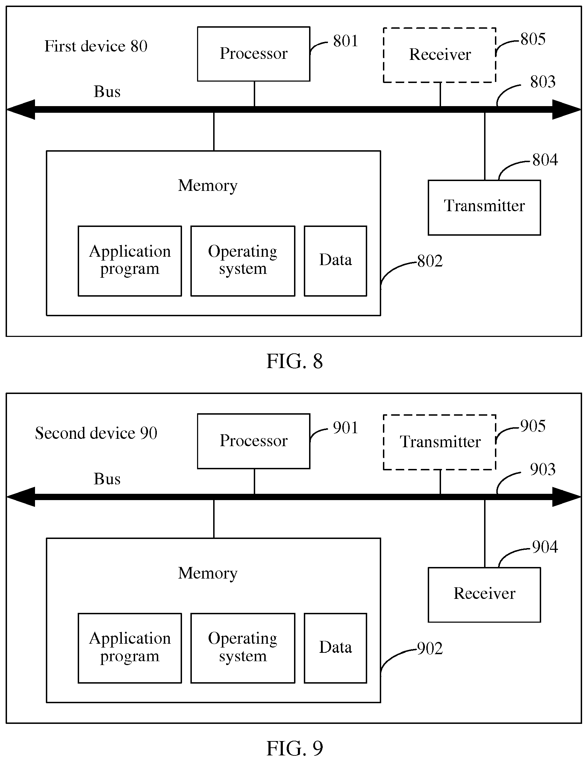

Based on the embodiment corresponding to FIG. 1, another embodiment of the present invention provides a first device, configured to execute the information transmission method described in the embodiment corresponding to FIG. 1, and preferably applied to a device to device D2D scenario. As shown in FIG. 8, the first device 80 includes at least one processor 801, a memory 802, a bus 803, and a transmitter 804. The at least one processor 801, the memory 802, and the transmitter 804 are connected and communicate with each other by using the bus 803.

The bus 803 may be an ISA (Industry Standard Architecture, industry standard architecture) bus, a PCI (Peripheral Component, peripheral component interconnect) bus, an EISA (Extended Industry Standard Architecture, extended industry standard architecture) bus, or the like. The bus 803 may be classified into an address bus, a data bus, a control bus, and the like. For convenience of representation, only one bold line is used for representation in FIG. 8, but it does not represent that there is only one bus or one type of bus.

The memory 802 is used for application program code for executing the solution of the present invention. The application program code for executing the solution of the present invention is stored in the memory, and is controlled and executed by the processor 801.

The memory may be a read-only memory ROM or another type of static storage device that can store static information and an instruction; a random access memory RAM or another type of dynamic storage device that can store information and an instruction; or an electrically erasable programmable read-only memory EEPROM, a compact disc read-only memory CD-ROM or another compact-disc memory, an optical disc (including compressed disc, laser disk, optical disc, digital general optical disc, Blu-ray disc, or the like) memory, a magnetic disk storage medium or another magnetic storage device, or any other media that can be used to carry or store expected program code in the form of an instruction or a data structure and can be accessed by a computer, but is not limited thereto. These memories are connected to the processor by using the bus.

The processor 801 may be a central processing unit 801 (Central Processing Unit, CPU for short), an application-specific integrated circuit (Application Specific Integrated Circuit, ASIC for short), or one or more integrated circuits configured to implement this embodiment of the present invention.

The processor 801 is configured to: generate a first scrambling sequence according to a first scrambling seed, and scramble first information according to the first scrambling sequence. The first scrambling seed is generated according to a relay level or an information source of the first information, the relay level of the first information is used to indicate a quantity of relay devices that the first information has passed by before being transmitted to a receive end, and the information source of the first information is used to indicate a location of a starting device for transmitting the first information.

The transmitter 804 is configured to send the first information scrambled by the processor 801. Optionally, in an application scenario, the first device 80 further includes a receiver 805. The receiver 805 is interconnected to the processor 801, the memory 802, and the transmitter 804 by using the bus 803.

The receiver 805 is configured to receive second information when a relay level of the second information is a preset level or an information source of the second information is a preset source. The relay level of the second information is used to indicate a quantity of relay devices that the second information has passed by before being transmitted to the first device, and the information source of the second information is used to indicate a location of a starting device for transmitting the second information. Optionally, the location of the starting device for transmitting the first information is within a network coverage area or outside a network coverage area.

The processor 801 is further configured to: generate a second scrambling sequence according to a second scrambling seed, and descramble the second information according to the second scrambling sequence. The second scrambling seed is generated according to the relay level or information source of the second information received by the receiver 805.

Further optionally, the processor 801 is further configured to: when the second scrambling seed indicates the relay level of the second information, use the relay level of the second information plus 1 as a new relay level of the second information, generate a third scrambling seed according to the new relay level of the second information, and generate a third scrambling sequence according to the third scrambling seed; and scramble the second information according to the third scrambling sequence.

The transmitter 804 is further configured to send the second information scrambled by the processor 801.

Optionally, N bits in the first scrambling seed may be used to indicate the relay level or information source of the first information, and N is an integer greater than 0.

Optionally, the first scrambling seed may alternatively include a physical layer identity ID, and the physical layer ID is used to indicate the relay level or information source of the first information.

If the physical layer ID is used to indicate the relay level of the first information, two specific implementations are listed herein for description:
Implementation 1: When a sequence of the physical layer ID included in a first scrambling seed is the first sequence, the relay level of the first information is 0; when the sequence of the physical layer ID included in the first scrambling seed is an (i+1)^{th} sequence, the relay level of the first information is i, where i is a positive integer.
Implementation 2: When an offset of the physical layer ID included in a first scrambling seed is the first offset, the relay level of the first information is 0; when the offset of the physical layer ID included in the first scrambling seed is an (i+1)^{th} offset, the relay level of the first information is i, where i is a positive integer.

Optionally, the first information is control signaling, data information, or a discovery signal.

The first device provided in this embodiment of the present invention generates a first scrambling sequence according to a first scrambling seed, scrambles first information according to the first scrambling sequence, and sends the first information, where the first scrambling seed is generated according to a relay level or an information source of the first information. Because the first scrambling seed indicates the relay level or information source of the first information, information of different relay levels or from different information sources but with same information content can be forwarded only once, avoiding repeated transmissions and saving channel resources. This resolves a problem in the prior art that in a D2D scenario, a terminal device cannot perform D2D communication due to a relatively long distance or a relatively significant change in channel quality.

Based on the embodiment corresponding to FIG. 3, the present invention provides a second device, configured to execute the information transmission method described in the embodiment corresponding to FIG. 3, and preferably applied to a device to device D2D scenario. As shown in FIG. 9, the second device 90 includes at least one processor 901, a memory 902, a bus 903, and a receiver 904. The at least one processor 901, the memory 902, and the receiver 904 are connected and communicate with each other by using the bus 903.

The bus 903 may be an ISA (Industry Standard Architecture, industry standard architecture) bus, a PCI (Peripheral Component, peripheral component interconnect) bus, an EISA (Extended Industry Standard Architecture, extended industry standard architecture) bus, or the like. The bus 903 may be classified into an address bus, a data bus, a control bus, and the like. For convenience of representation, only one bold line is used for representation in FIG. 9, but it does not represent that there is only one bus or one type of bus.

The memory 902 is used for application program code for executing the solution of the present invention. The application program code for executing the solution of the present invention is stored in the memory, and is controlled and executed by the processor 901.

The memory may be a read-only memory ROM or another type of static storage device that can store static information and an instruction; a random access memory RAM or another type of dynamic storage device that can store information and an instruction; or an electrically erasable programmable read-only memory EEPROM, a compact disc read-only memory CD-ROM or another compact-disc memory, an optical disc (including compressed disc, laser disk, optical disc, digital general optical disc, Blu-ray disc, or the like) memory, a magnetic disk storage medium or another magnetic storage device, or any other media that can be used to carry or store expected program code in the form of an instruction or a data structure and can be accessed by a computer, but is not limited thereto. These memories are connected to the processor by using the bus.

The processor 901 may be a central processing unit 901 (Central Processing Unit, CPU for short), an application-specific integrated circuit (Application Specific Integrated Circuit, ASIC for short), or one or more integrated circuits configured to implement this embodiment of the present invention.

The receiver 904 is configured to receive first information when a relay level of the first information is a preset level or an information source of the first information is a preset source. The relay level of the first information is used to indicate a quantity of relay devices that the first information has passed by before being transmitted to the second device. The information source of the first information is used to indicate a location of a starting device for transmitting the first information. Optionally, the location of the starting device for transmitting the first information is within a network coverage area or outside a network coverage area.

The processor 901 is configured to: generate a first scrambling sequence according to a first scrambling seed, and descramble the first information according to the first scrambling sequence. The first scrambling seed is generated according to the relay level or information source of the first information.

Optionally, the second device 90 further includes a transmitter 905. The transmitter 905 is interconnected to the processor 901, the memory 902, and the transmitter 905 by using the bus 903. Optionally, in an application scenario:
The processor 901 is further configured to: generate a second scrambling sequence according to a second scrambling seed, and scramble second information according to the second scrambling sequence. The second scrambling seed is generated according to a relay level or an information source of the second information, the relay level of the second information is used to indicate a quantity of relay devices that the second information has passed by before being transmitted to a receive end, and the information source of the second information is used to indicate a location of a starting device for transmitting the second information.

The transmitter 905 is configured to send the second information scrambled by the processor 901. Optionally, in another application scenario:
The processor 901 is further configured to: when the first scrambling seed indicates the relay level of the first information, use the relay level of the first information plus 1 as a new relay level of the first information, generate a third scrambling seed according to the new relay level of the first information, and generate a third scrambling sequence according to the third scrambling seed; and scramble the first information according to the third scrambling sequence.

The transmitter 905 is configured to send the first information scrambled by the processor 901. Optionally, N bits in the first scrambling seed may be used to indicate the relay level or information source of the first information, and N is an integer greater than 0.

Optionally, the first scrambling seed may alternatively include a physical layer identity ID, and the physical layer ID is used to indicate the relay level or information source of the first information.

If the physical layer ID is used to indicate the relay level of the first information, two specific implementations are listed herein for description:
Implementation 1: When a sequence of the physical layer ID included in a first scrambling seed is the first sequence, the relay level of the first information is 0; when the sequence of the physical layer ID included in the first scrambling seed is an (i+1)^{th} sequence, the relay level of the first information is i, where i is a positive integer.
Implementation 2: When an offset of the physical layer ID included in a first scrambling seed is the first offset, the relay level of the first information is 0; when the offset of the physical layer ID included in the first scrambling seed is an (i+1)^{th} offset, the relay level of the first information is i, where i is a positive integer.

Optionally, the first information is control signaling, data information, or a discovery signal.

The second device provided in this embodiment of the present invention receives first information when a relay level of the first information is a preset level or an information source of the first information is a preset source, generates a first scrambling sequence according to a first scrambling seed, and descrambles the first information according to the first scrambling sequence, where the first scrambling seed is generated according to the relay level or information source of the first information. Because the first scrambling seed indicates the relay level or information source of the first information, information of different relay levels or from different information sources but with same information content can be forwarded only once, avoiding repeated transmissions and saving channel resources. This resolves a problem in the prior art that in a D2D scenario, a terminal device cannot perform D2D communication due to a relatively long distance or a relatively significant change in channel quality.

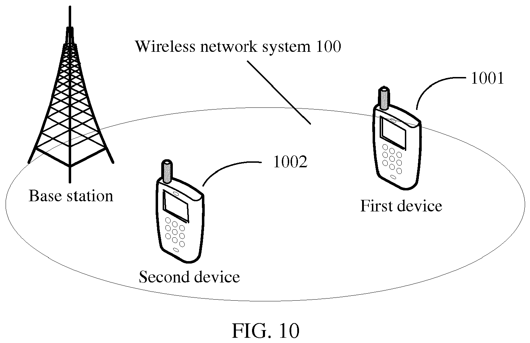

Based on the embodiments corresponding to FIG. 1, FIG. 3, and FIG. 5, an embodiment of the present invention provides a wireless network system, configured to execute the information transmission methods described in the embodiments corresponding to FIG. 1, FIG. 3, and FIG. 5. As shown in FIG. 10, the wireless network system 100 includes a first device 1001 and a second device 1002.

The first device 1001 is the first device described in the embodiment corresponding to FIG. 6, and the second device 1002 is the second device described in the embodiment corresponding to FIG. 7. Alternatively, the first device 1001 is the first device described in the embodiment corresponding to FIG. 8, and the second device 1002 is the second device described in the embodiment corresponding to FIG. 9.

According to the wireless network system provided in the present invention, a first device generates a first scrambling sequence according to a first scrambling seed, scrambles first information according to the first scrambling sequence, and sends the first information, where the first scrambling seed is generated according to a relay level or an information source of the first information. Because the first scrambling seed indicates the relay level or information source of the first information, information of different relay levels or from different information sources but with same information content can be forwarded only once, avoiding repeated transmissions and saving channel resources. This resolves a problem in the prior art that in a D2D scenario, a terminal device cannot perform D2D communication due to a relatively long distance or a relatively significant change in channel quality.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following is taken as an example but is not limited: The computer readable medium may include a RAM (Random Access Memory, random access memory), a ROM (Read-Only Memory, read-only memory), an EEPROM (Electrically Erasable Programmable Read-Only Memory, electrically erasable programmable read-only memory), a CD-ROM (Compact Disc Read-Only Memory, compact disc read-only memory) or other optical disk storage, a disk storage medium or other disk storage, or any other medium that can be used to carry or store expected program code in a command or data structure form and can be accessed by a computer. In addition, any connection may be appropriately defined as a computer-readable medium. For example, if software is transmitted from a website, a server or another remote source by using a coaxial cable, an optical fiber/cable, a twisted pair, a DSL (Digital Subscriber Line, digital subscriber line) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk and a disc used by the present invention includes a CD (Compact Disc, compact disc), a laser disc, an optical disc, a DVD disc (Digital Versatile Disc, digital versatile disc), a floppy disk and a Blu-ray disc, where the disk generally copies data by a magnetic means, and the disc copies data optically by a laser means. The foregoing combination should also be included in the protection scope of the computer-readable medium.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An information transmission method, applied to a device to device, D2D, scenario, comprising:
receiving, by a second device, first information from a first device when a relay level of the first information is a preset level or an information source of the first information is a preset source, wherein the relay level of the first information is used to indicate a quantity of relay devices that the first information has passed by before being transmitted to the second device, and the information source of the first information is used to indicate a location of a starting device for transmitting the first information, wherein the first information from the first device has been scrambled based on a scrambling sequence, wherein a scrambling seed used for generating the scrambling sequence is generated according to the relay level or the information source of the first information;
generating (302, 504), by the second device, a first scrambling sequence according to a first scrambling seed; and
descrambling (303, 504), by the second device, the first information according to the first scrambling sequence;
wherein the steps of receiving (301, 503), generating (302, 504) and descrambling (303, 504) specifically comprise:
temporarily storing, by the second device, all or a part of the first information and descrambling, by the second device, the temporarily stored part according to the first scrambling seed, wherein the first scrambling seed is generated according to the preset level or the preset source;
if the descrambling is correctly performed, it indicates that the relay level of the first information is the preset level or the information source of the first information is the preset source, receiving, by the second device, the remaining part of the first information or descramble all temporarily stored first information.

2. The method according to claim 1, wherein the method further comprises:
generating, by the second device, a second scrambling sequence according to a second scrambling seed, wherein the second scrambling seed is generated according to a relay level or an information source of second information, the relay level of the second information is used to indicate a quantity of relay devices that the second information has passed by before being transmitted to a receive end, and the information source of the second information is used to indicate a location of a starting device for transmitting the second information; and
scrambling, by the second device, the second information according to the second scrambling sequence, and sending the second information.

3. The method according to claim 1, wherein:
when the first scrambling seed indicates the relay level of the first information,
after the descrambling (303, 504), by the second device, the first information according to the first scrambling sequence, the method further comprises:
using (505), by the second device, the relay level of the first information plus 1 as a new relay level of the first information, generating a third scrambling seed according to the new relay level of the first information, and generating a third scrambling sequence according to the third scrambling seed; and
scrambling (506), by the second device, the first information according to the third scrambling sequence, and sending the first information.

4. The method according to any one of claims 1 to 3, wherein
N bits in the first scrambling seed indicate the relay level or information source of the first information, and N is an integer greater than 0.

5. The method according to any one of claims 1 to 4, wherein
the first scrambling seed comprises a physical layer identity ID, and the physical layer ID is used to indicate the relay level or information source of the first information.

6. The method according to claim 5, wherein the physical layer ID is used to indicate the relay level of the first information; and
when a sequence of the physical layer ID comprised in the first scrambling seed is a first sequence, the relay level of the first information is 0; when the sequence of the physical layer ID comprised in the first scrambling seed is an (i+1)^{th} sequence, the relay level of the first information is i, wherein i is a positive integer.

7. The method according to claim 5, wherein:
when an offset of the physical layer ID comprised in the first scrambling seed is a first offset, the relay level of the first information is 0; when the offset of the physical layer ID comprised in the first scrambling seed is an (i+1)^{th} offset, the relay level of the first information is i, wherein i is a positive integer.

8. A second device, applied to a device to device D2D scenario, wherein the second device comprises a processor, a memory, a bus, and a receiver, and the processor, the memory, and the receiver are interconnected by using the bus;
the receiver is configured to: receive first information from a first device when a relay level of the first information is a preset level or an information source of the first information is a preset source (301), wherein the relay level of the first information is used to indicate a quantity of relay devices that the first information has passed by before being transmitted to the second device, and the information source of the first information is used to indicate a location of a starting device for transmitting the first information, wherein the first information from the first device has been scrambled based on a scrambling sequence, wherein a scrambling seed used for generating the scrambling sequence is generated according to the relay level or the information source of the first information; and
the processor is configured to: generate a first scrambling sequence according to a first scrambling seed (302), and descramble the first information according to the first scrambling sequence (303);
wherein the processor is specifically configured to temporarily store all or a part of the first information, and descramble the temporarily stored part according to the first scrambling seed, wherein the first scrambling seed is generated according to the preset level or the preset source;
if the descrambling is correctly performed by the processor, it indicates that the relay level of the first information is the preset level or the information source of the first information is the preset source, the receiver is specifically configured to receive the remaining part of the first information or the processor is specifically configured to descramble all temporarily stored first information.

9. The second device according to claim 8, wherein the second device further comprises a transmitter, and the transmitter is interconnected to the processor, the memory, and the transmitter by using the bus;
the processor is further configured to: generate a second scrambling sequence according to a second scrambling seed, and scramble the second information according to the second scrambling sequence, wherein the second scrambling seed is generated according to a relay level or an information source of the second information, the relay level of the second information is used to indicate a quantity of relay devices that the second information has passed by before being transmitted to a receive end, and the information source of the second information is used to indicate a location of a starting device for transmitting the second information; and
the transmitter is configured to send the second information scrambled by the processor.

10. The second device according to claim 8, wherein the second device further comprises a transmitter, and the transmitter is interconnected to the processor, the memory, and the transmitter by using the bus;
the processor is further configured to: when the first scrambling seed indicates the relay level of the first information, use the relay level of the first information plus 1 as a new relay level of the first information, generate a third scrambling seed according to the new relay level of the first information, generate a third scrambling sequence according to the third scrambling seed, and scramble the first information according to the third scrambling sequence; and
the transmitter is configured to send the first information scrambled by the processor.

11. The second device according to any one of claims 8 to 10, wherein
N bits in the first scrambling seed indicate the relay level or information source of the first information, and N is an integer greater than 0.

12. The second device according to any one of claims 8 to 11, wherein
the first scrambling seed comprises a physical layer identity ID, and the physical layer ID is used to indicate the relay level or information source of the first information.

13. The second device according to claim 12, wherein the physical layer ID is used to indicate the relay level of the first information; and
when a sequence of the physical layer ID comprised in the first scrambling seed is a first sequence, the relay level of the first information is 0; when the sequence of the physical layer ID comprised in the first scrambling seed is an (i+1)^{th} sequence, the relay level of the first information is i, wherein i is a positive integer.

14. The second device according to claim 12, wherein
when an offset of the physical layer ID comprised in the first scrambling seed is a first offset, the relay level of the first information is 0; when the offset of the physical layer ID comprised in the first scrambling seed is an (i+1)^{th} offset, the relay level of the first information is i, wherein i is a positive integer.

15. A wireless network system, applied to a device to device D2D scenario, comprising a first device and a second device configured to perform a method according to any one of claims 1 to 7, wherein the first device is configured to:
generate a first scrambling sequence according to a first scrambling seed, and scramble the first information according to the first scrambling sequence, wherein the first scrambling seed is generated according to a relay level or an information source of the first information, the relay level of the first information is used to indicate a quantity of relay devices that the first information has passed by before being transmitted to a receive end, and the information source of the first information is used to indicate a location of a starting device for transmitting the first information; and
send the first information scrambled by the first device.

## Patentansprüche

1. Informationsübertragungsverfahren, angewandt auf ein Vorrichtung-zu-Vorrichtung-Szenarium bzw. D2D-Szenarium, umfassend:
Empfangen, durch eine zweite Vorrichtung, von ersten Informationen von einer ersten Vorrichtung, wenn ein Relaisniveau der ersten Informationen ein voreingestelltes Niveau ist oder eine Informationsquelle der ersten Informationen eine voreingestellte Quelle ist, wobei das Relaisniveau der ersten Informationen verwendet wird zum Angeben einer Anzahl von Relaisvorrichtungen, die die ersten Informationen passiert haben, bevor sie an die zweite Vorrichtung übertragen wurden, und die Informationsquelle der ersten Informationen verwendet wird zum Angeben eines Orts einer Startvorrichtung zum Übertragen der ersten Informationen, wobei die ersten Informationen von der ersten Vorrichtung auf der Grundlage einer Verwürfelungssequenz verwürfelt wurden, wobei ein zum Erzeugen der Verwürfelungssequenz verwendeter Verwürfelungskeim gemäß dem Relaisniveau oder der Informationsquelle der ersten Informationen erzeugt wird;
Erzeugen (302, 504), durch die zweite Vorrichtung, einer ersten Verwürfelungssequenz gemäß einem ersten Verwürfelungskeim; und
Entwürfeln (303, 504), durch die zweite Vorrichtung, der ersten Informationen gemäß der ersten Verwürfelungssequenz;
wobei die Schritte des Empfangens (301, 503), Erzeugens (302, 504) und Entwürfelns (303, 504) insbesondere Folgendes umfassen:
temporäres Speichern, durch die zweite Vorrichtung, aller oder eines Teils der ersten Informationen und Entwürfeln, durch die zweite Vorrichtung, des temporär gespeicherten Teils gemäß dem ersten Verwürfelungskeim, wobei der erste Verwürfelungskeim gemäß dem voreingestellten Niveau oder der voreingestellten Quelle erzeugt wird;
falls das Entwürfeln korrekt durchgeführt wurde, gibt es an, dass das Relaisniveau der ersten Informationen das voreingestellte Niveau ist oder dass die Informationsquelle der ersten Informationen die voreingestellte Quelle ist, Empfangen, durch die zweite Vorrichtung, des verbliebenen Teils der ersten Informationen oder Entwürfeln aller temporär gespeicherten ersten Informationen.

2. Verfahren nach Anspruch 1, wobei das Verfahren ferner Folgendes umfasst:
Erzeugen, durch die zweite Vorrichtung, einer zweiten Verwürfelungssequenz gemäß einem zweiten Verwürfelungskeim, wobei der zweite Verwürfelungskeim gemäß einem Relaisniveau oder einer Informationsquelle von zweiten Informationen erzeugt wird, wobei das Relaisniveau der zweiten Informationen verwendet wird zum Angeben einer Anzahl von Relaisvorrichtungen, die die zweiten Informationen passiert haben, bevor sie an ein Empfangsende übertragen wurden, und die Informationsquelle der zweiten Informationen verwendet wird zum Angeben eines Orts einer Startvorrichtung zum Übertragen der zweiten Informationen; und
Verwürfeln, durch die zweite Vorrichtung, der zweiten Informationen gemäß der zweiten Verwürfelungssequenz und Senden der zweiten Informationen.

3. Verfahren nach Anspruch 1, wobei:
wenn der erste Verwürfelungskeim das Relaisniveau der ersten Informationen angibt, umfasst das Verfahren nach dem Entwürfeln (303, 504), durch die zweite Vorrichtung, der ersten Informationen gemäß der ersten Verwürfelungssequenz, ferner Folgendes: Verwenden (505), durch die zweite Vorrichtung, des Relaisniveaus der ersten Informationen plus 1 als ein neues Relaisniveau der ersten Informationen, Erzeugen eines dritten Verwürfelungskeims gemäß dem neuen Relaisniveau der ersten Informationen und Erzeugen einer dritten Verwürfelungssequenz gemäß dem dritten Verwürfelungskeim; und
Verwürfeln (506), durch die zweite Vorrichtung, der ersten Informationen gemäß der dritten Verwürfelungssequenz und Senden der ersten Informationen.

4. Verfahren nach einem der Ansprüche 1 bis 3, wobei
N Bits in dem ersten Verwürfelungskeim das Relaisniveau oder die Informationsquelle der ersten Informationen angeben und N eine ganze Zahl größer als 0 ist.

5. Verfahren nach einem der Ansprüche 1 bis 4, wobei
der erste Verwürfelungskeim eine Bitübertragungsschicht-Identität bzw. Bitübertragungsschicht-ID umfasst, und die Bitübertragungsschicht-ID verwendet wird zum Angeben des Relaisniveaus oder der Informationsquelle der ersten Informationen.

6. Verfahren nach Anspruch 5, wobei die Bitübertragungsschicht-ID verwendet wird zum Angeben des Relaisniveaus der ersten Informationen; und
wenn eine in dem ersten Verwürfelungskeim enthaltene Sequenz der Bitübertragungsschicht-ID eine erste Sequenz ist, ist das Relaisniveau der ersten Informationen 0; wenn die in dem ersten Verwürfelungskeim enthaltene Sequenz der Bitübertragungsschicht-ID eine (i+1)-te Sequenz ist, ist das Relaisniveau der ersten Informationen i, wobei i eine positive ganze Zahl ist.

7. Verfahren nach Anspruch 5, wobei:
wenn ein Versatz der in dem ersten Verwürfelungskeim enthaltenen Bitübertragungsschicht-ID ein erster Versatz ist, ist das Relaisniveau der ersten Informationen 0; wenn der Versatz der in dem ersten Verwürfelungskeim enthaltenen Bitübertragungsschicht-ID ein (i+1)-ter Versatz ist, ist das Relaisniveau der ersten Informationen i, wobei i eine positive ganze Zahl ist.

8. Zweite Vorrichtung, angewandt auf ein Vorrichtung-zu-Vorrichtung-Szenarium bzw. D2D-Szenarium, wobei die zweite Vorrichtung einen Prozessor, einen Speicher, einen Bus und einen Empfänger umfasst, und der Prozessor, der Speicher und der Empfänger unter Verwendung des Busses verschaltet sind;
wobei der Empfänger ausgelegt ist zum: Empfangen von ersten Informationen von einer ersten Vorrichtung, wenn ein Relaisniveau der ersten Informationen ein voreingestelltes Niveau ist oder eine Informationsquelle der ersten Informationen eine voreingestellte Quelle (301) ist,
wobei das Relaisniveau der ersten Informationen verwendet wird zum Angeben einer Anzahl von Relaisvorrichtungen, die die ersten Informationen passiert haben, bevor sie an die zweite Vorrichtung übertragen wurden, und die Informationsquelle der ersten Informationen verwendet wird zum Angeben eines Orts einer Startvorrichtung zum Übertragen der ersten Informationen, wobei die ersten Informationen von der ersten Vorrichtung auf der Grundlage einer Verwürfelungssequenz verwürfelt wurden, wobei ein zum Erzeugen der Verwürfelungssequenz verwendeter Verwürfelungskeim gemäß dem Relaisniveau oder der Informationsquelle der ersten Informationen erzeugt wird; und
der Prozessor ausgelegt ist zum: Erzeugen einer ersten Verwürfelungssequenz gemäß einem ersten Verwürfelungskeim (302),
und Entwürfeln der ersten Informationen gemäß der ersten Verwürfelungssequenz (303);
wobei der Prozessor insbesondere ausgelegt ist zum temporären Speichern aller oder eines Teils der ersten Informationen und zum Entwürfeln des temporär gespeicherten Teils gemäß dem ersten Verwürfelungskeim, wobei der erste Verwürfelungskeim gemäß dem voreingestellten Niveau oder der voreingestellten Quelle erzeugt wird;
falls das Entwürfeln durch den Prozessor korrekt durchgeführt wurde, gibt es an, dass das Relaisniveau der ersten Informationen das voreingestellte Niveau ist oder dass die Informationsquelle der ersten Informationen die voreingestellte Quelle ist, wobei der Empfänger insbesondere ausgelegt ist zum Empfangen des verbliebenen Teils der ersten Informationen oder der Prozessor insbesondere ausgelegt ist zum Entwürfeln aller temporär gespeicherten ersten Informationen.

9. Zweite Vorrichtung nach Anspruch 8, wobei die zweite Vorrichtung ferner einen Sender umfasst und der Sender mit dem Prozessor, dem Speicher und dem Sender unter Verwendung des Busses verschaltet ist;
wobei der Prozessor ferner ausgelegt ist zum: Erzeugen einer zweiten Verwürfelungssequenz gemäß einem zweiten Verwürfelungskeim und zum Verwürfeln der zweiten Informationen gemäß der zweiten Verwürfelungssequenz, wobei der zweite Verwürfelungskeim gemäß einem Relaisniveau oder einer Informationsquelle der zweiten Informationen erzeugt wird, wobei das Relaisniveau der zweiten Informationen verwendet wird zum Angeben einer Anzahl von Relaisvorrichtungen, die die zweiten Informationen passiert haben, bevor sie an ein Empfangsende übertragen wurden, und die Informationsquelle der zweiten Informationen verwendet wird zum Angeben eines Orts einer Startvorrichtung zum Übertragen der zweiten Informationen; und
der Sender ausgelegt ist zum Senden der durch den Prozessor verwürfelten zweiten Informationen.

10. Zweite Vorrichtung nach Anspruch 8, wobei die zweite Vorrichtung ferner einen Sender umfasst und der Sender mit dem Prozessor, dem Speicher und dem Sender unter Verwendung des Busses verschaltet ist;
wobei der Prozessor ferner ausgelegt ist zum: wenn der erste Verwürfelungskeim das Relaisniveau der ersten Informationen angibt, Verwenden des Relaisniveaus der ersten Informationen plus 1 als ein neues Relaisniveau der ersten Informationen, Erzeugen eines dritten Verwürfelungskeims gemäß dem neuen Relaisniveau der ersten Informationen, Erzeugen einer dritten Verwürfelungssequenz gemäß dem dritten Verwürfelungskeim und Verwürfeln der ersten Informationen gemäß der dritten Verwürfelungssequenz; und
der Sender ausgelegt ist zum Senden der durch den Prozessor verwürfelten ersten Informationen.

11. Zweite Vorrichtung nach einem der Ansprüche 8 bis 10, wobei N Bits in dem ersten Verwürfelungskeim das Relaisniveau oder die Informationsquelle der ersten Informationen angeben und N eine ganze Zahl größer als 0 ist.

12. Zweite Vorrichtung nach einem der Ansprüche 8 bis 11, wobei der erste Verwürfelungskeim eine Bitübertragungsschicht-Identität bzw. Bitübertragungsschicht-ID umfasst, und die Bitübertragungsschicht-ID verwendet wird zum Angeben des Relaisniveaus oder der Informationsquelle der ersten Informationen.

13. Zweite Vorrichtung nach Anspruch 12, wobei die Bitübertragungsschicht-ID verwendet wird zum Angeben des Relaisniveaus der ersten Informationen; und wenn eine in dem ersten Verwürfelungskeim enthaltene Sequenz der Bitübertragungsschicht-ID eine erste Sequenz ist, ist das Relaisniveau der ersten Informationen 0; wenn die in dem ersten Verwürfelungskeim enthaltene Sequenz der Bitübertragungsschicht-ID eine (i+1)-te Sequenz ist, ist das Relaisniveau der ersten Informationen i, wobei i eine positive ganze Zahl ist.

14. Zweite Vorrichtung nach Anspruch 12, wobei
wenn ein Versatz der in dem ersten Verwürfelungskeim enthaltenen Bitübertragungsschicht-ID ein erster Versatz ist, ist das Relaisniveau der ersten Informationen 0; wenn der Versatz der in dem ersten Verwürfelungskeim enthaltenen Bitübertragungsschicht-ID ein (i+1)-ter Versatz ist, ist das Relaisniveau der ersten Informationen i, wobei i eine positive ganze Zahl ist.

15. Drahtlosnetzsystem, angewandt auf ein Vorrichtung-zu-Vorrichtung-Szenarium bzw. D2D-Szenarium, umfassend eine erste Vorrichtung und ein zweite Vorrichtung, ausgelegt zum Durchführen eines Verfahrens nach einem der Ansprüche 1 bis 7, wobei die erste Vorrichtung ausgelegt ist zum:
Erzeugen einer ersten Verwürfelungssequenz gemäß einem ersten Verwürfelungskeim und Verwürfeln der ersten Informationen gemäß der ersten Verwürfelungssequenz, wobei der erste Verwürfelungskeim gemäß einem Relaisniveau oder einer Informationsquelle der ersten Informationen erzeugt wird, wobei das Relaisniveau der ersten Informationen verwendet wird zum Angeben einer Anzahl von Relaisvorrichtungen, die die ersten Informationen passiert haben, bevor sie an ein Empfangsende übertragen wurden, und die Informationsquelle der ersten Informationen verwendet wird zum Angeben eines Orts einer Startvorrichtung zum Übertragen der ersten Informationen; und
Senden der durch die erste Vorrichtung verwürfelten ersten Informationen.

## Revendications

1. Procédé de transmission d'informations, appliqué à un scénario de dispositif à dispositif, D2D, comprenant :
recevoir, par un deuxième dispositif, des premières informations à partir d'un premier dispositif lorsqu'un niveau de relais des premières informations est un niveau prédéfini ou qu'une source d'informations des premières informations est une source prédéfinie, dans lequel le niveau de relais des premières informations est utilisé pour indiquer une quantité de dispositifs relais par lesquels sont passées les premières informations avant d'être transmises au deuxième dispositif, et la source d'informations des premières informations est utilisée pour indiquer un emplacement d'un dispositif de départ pour transmettre les premières informations, dans lequel les premières informations provenant du premier dispositif ont été brouillées sur la base d'une séquence de brouillage, dans lequel une graine de brouillage utilisée pour générer la séquence de brouillage est générée en fonction du niveau de relais ou de la source d'informations des premières informations ;
générer (302, 504), par le deuxième dispositif, une première séquence de brouillage en fonction d'une première graine de brouillage ; et
désembrouiller (303, 504), par le deuxième dispositif, les premières informations en fonction de la première séquence de brouillage ;
dans lequel les étapes de réception (301, 503), de génération (302, 504) et de désembrouillage (303, 504) comprennent spécifiquement :
stocker temporairement, par le deuxième dispositif, tout ou partie des premières informations, et désembrouiller, par le deuxième dispositif, la partie stockée temporairement en fonction de la première graine de brouillage, dans lequel la première graine de brouillage est générée en fonction du niveau prédéfini ou de la source prédéfinie ;
si le désembrouillage est correctement effectué, il indique que le niveau de relais des premières informations est le niveau prédéfini ou que la source d'information des premières informations est la source prédéfinie, recevoir, par le deuxième dispositif, la partie restante des premières informations ou désembrouiller toutes les premières informations stockées temporairement.

2. Procédé selon la revendication 1, le procédé comprenant en outre :
générer, par le deuxième dispositif, une deuxième séquence de brouillage en fonction d'une deuxième graine de brouillage, dans lequel la deuxième graine de brouillage est générée en fonction d'un niveau de relais ou d'une source d'informations de deuxièmes informations, le niveau de relais des deuxièmes informations est utilisé pour indiquer une quantité de dispositifs de relais par lesquels sont passées les deuxièmes informations avant d'être transmises à une extrémité de réception, et la source d'informations des deuxièmes informations est utilisée pour indiquer un emplacement d'un dispositif de départ pour transmettre les deuxièmes informations ; et
brouiller, par le deuxième dispositif, les deuxièmes informations en fonction de la deuxième séquence de brouillage, et envoyer les deuxièmes informations.

3. Procédé selon la revendication 1,
lorsque la première graine de brouillage indique le niveau de relais des premières informations,
après le désembrouillage (303, 504), par le deuxième dispositif, des premières informations en fonction de la première séquence de brouillage, le procédé comprenant en outre :
utiliser (505), par le deuxième dispositif, le niveau de relais des premières informations plus 1 comme nouveau niveau de relais des premières informations, générer une troisième graine de brouillage en fonction du nouveau niveau de relais des premières informations, et générer une troisième séquence de brouillage en fonction de la troisième graine de brouillage ; et
brouiller (506), par le deuxième dispositif, les premières informations en fonction de la troisième séquence de brouillage, et envoyer les premières informations.

4. Procédé selon l'une quelconque des revendications 1 à 3, dans lequel :
N bits dans la première graine de brouillage indiquent le niveau de relais ou la source d'informations des premières informations, et N est un entier supérieur à 0.

5. Procédé selon l'une quelconque des revendications 1 à 4, dans lequel :
la première graine de brouillage comprend un ID d'identité de couche physique, et l'ID de couche physique est utilisé pour indiquer le niveau de relais ou la source d'informations des premières informations.

6. Procédé selon la revendication 5, dans lequel l'ID de couche physique est utilisé pour indiquer le niveau de relais des premières informations ; et
lorsqu'une séquence de l'ID de couche physique compris dans la première graine de brouillage est une première séquence, le niveau de relais des premières informations est 0 ; lorsque la séquence de l'ID de couche physique compris dans la première graine de brouillage est une (i+1)^{-ième} séquence, le niveau de relais des premières informations est i, où i est un entier positif.

7. Procédé selon la revendication 5, dans lequel :
lorsqu'un décalage de l'ID de couche physique compris dans la première graine de brouillage est un premier décalage, le niveau de relais des premières informations est 0 ; lorsque le décalage de l'ID de couche physique compris dans la première graine de brouillage est un (i+1)^{-ième} décalage, le niveau de relais des premières informations est i, où i est un entier positif.

8. Deuxième dispositif, appliqué à un scénario de dispositif à dispositif D2D, le deuxième dispositif comprenant un processeur, une mémoire, un bus et un récepteur, et le processeur, la mémoire et le récepteur étant interconnectés en utilisant le bus ;
le récepteur étant configuré pour : recevoir des premières informations à partir d'un premier dispositif lorsqu'un niveau de relais des premières informations est un niveau prédéfini ou qu'une source d'informations des premières informations est une source prédéfinie (301),
dans lequel le niveau de relais des premières informations est utilisé pour indiquer une quantité de dispositifs de relais par lesquels sont passées les premières informations avant d'être transmises au deuxième dispositif, et la source d'informations des premières informations est utilisée pour indiquer un emplacement d'un dispositif de départ pour transmettre les premières informations, dans lequel les premières informations du premier dispositif ont été brouillées sur la base d'une séquence de brouillage, dans lequel une graine de brouillage utilisée pour générer la séquence de brouillage est générée en fonction du niveau de relais ou de la source d'informations des premières informations ; et
le processeur est configuré pour : générer une première séquence de brouillage en fonction d'une première graine de brouillage (302),
et désembrouiller les premières informations en fonction de la première séquence de brouillage (303) ;
dans lequel le processeur est spécifiquement configuré pour stocker temporairement tout ou partie des premières informations, et désembrouiller la partie stockée temporairement en fonction de la première graine de brouillage, dans lequel la première graine de brouillage est générée en fonction du niveau prédéfini ou de la source prédéfinie ;
si le désembrouillage est correctement effectué par le processeur, il indique que le niveau de relais des premières informations est le niveau prédéfini ou que la source d'information des premières informations est la source prédéfinie, le récepteur étant spécifiquement configuré pour recevoir la partie restante des premières informations ou le processeur est spécifiquement configuré pour désembrouiller toutes les premières informations stockées temporairement.

9. Deuxième dispositif selon la revendication 8, le deuxième dispositif comprenant en outre un émetteur, et l'émetteur étant interconnecté au processeur, à la mémoire et à l'émetteur en utilisant le bus ;
le processeur étant en outre configuré pour : générer une deuxième séquence de brouillage en fonction d'une deuxième graine de brouillage, et brouiller les deuxièmes informations en fonction de la deuxième séquence de brouillage, la deuxième graine de brouillage étant générée en fonction d'un niveau de relais ou d'une source d'informations des deuxièmes informations, le niveau de relais des deuxièmes informations étant utilisé pour indiquer une quantité de dispositifs relais par lesquels sont passées les deuxièmes informations avant d'être transmises à une extrémité de réception, et la source d'informations des deuxièmes informations étant utilisée pour indiquer un emplacement d'un dispositif de départ pour transmettre les deuxièmes informations ; et
l'émetteur étant configuré pour envoyer les deuxièmes informations brouillées par le processeur.

10. Deuxième dispositif selon la revendication 8, le deuxième dispositif comprenant en outre un émetteur, et l'émetteur étant interconnecté au processeur, à la mémoire et à l'émetteur en utilisant le bus ;
le processeur étant en outre configuré pour : lorsque la première graine de brouillage indique le niveau de relais des premières informations, utiliser le niveau de relais des premières informations plus 1 comme nouveau niveau de relais des premières informations, générer une troisième graine de brouillage en fonction du nouveau niveau de relais des premières informations, générer une troisième séquence de brouillage en fonction de la troisième graine de brouillage, et brouiller les premières informations en fonction de la troisième séquence de brouillage ; et
l'émetteur étant configuré pour envoyer les premières informations brouillées par le processeur.

11. Deuxième dispositif selon l'une quelconque des revendications 8 à 10, dans lequel N bits dans la première graine de brouillage indiquent le niveau de relais ou la source d'informations des premières informations, et N est un entier supérieur à 0.

12. Deuxième dispositif selon l'une quelconque des revendications 8 à 11, dans lequel la première graine de brouillage comprend un ID d'identité de couche physique, et l'ID de couche physique est utilisé pour indiquer le niveau de relais ou la source d'informations des premières informations.

13. Deuxième dispositif selon la revendication 12, dans lequel l'ID de couche physique est utilisé pour indiquer le niveau de relais des premières informations ; et
lorsqu'une séquence de l'ID de couche physique compris dans la première graine de brouillage est une première séquence, le niveau de relais des premières informations est 0 ; lorsque la séquence de l'ID de couche physique compris dans la première graine de brouillage est une (i+1)^{-ième} séquence, le niveau de relais des premières informations est i, où i est un entier positif.

14. Deuxième dispositif selon la revendication 12, dans lequel
lorsqu'un décalage de l'ID de couche physique compris dans la première graine de brouillage est un premier décalage, le niveau de relais des premières informations est 0 ; lorsque le décalage de l'ID de couche physique compris dans la première graine de brouillage est un (i+1)^{-ième} décalage, le niveau de relais des premières informations est i, où i est un entier positif.

15. Système de réseau sans fil, appliqué à un scénario de dispositif à dispositif D2D, comprenant un premier dispositif et un deuxième dispositif configurés pour exécuter un procédé selon l'une quelconque des revendications 1 à 7, dans lequel le premier dispositif est configuré pour :
générer une première séquence de brouillage en fonction d'une première graine de brouillage, et brouiller les premières informations en fonction de la première séquence de brouillage, dans lequel la première graine de brouillage est générée en fonction d'un niveau de relais ou d'une source d'informations des premières informations, le niveau de relais des premières informations est utilisé pour indiquer une quantité de dispositifs relais par lesquels sont passées les premières informations avant d'être transmises à une extrémité de réception, et la source d'informations des premières informations est utilisée pour indiquer un emplacement d'un dispositif de départ pour transmettre les premières informations ; et
envoyer les premières informations brouillées par le premier dispositif.
